Europäisches Patentamt

European Patent Office

Office européen des brevets

(19)

(11) Veröffentlichungsnummer: **0 002 044**
**B1**

(12) **EUROPÄISCHE PATENTSCHRIFT**

(45) Veröffentlichungstag der Patentschrift: **09.06.82**

(21) Anmeldenummer: **78101353.7**

(22) Anmeldetag: **11.11.78**

(51) Int. Cl.³: **D 21 H 3/36,**
**D 06 M 15/08,**
**D 06 M 15/52, C 08 L 61/20**
**//(C08L61/20, 33/00)**

(54) **Mittel zum Tränken von cellulosehaltigen Faserstoffen.**

(30) Priorität: **23.11.77 DE 2752159**

(43) Veröffentlichungstag der Anmeldung:
**30.05.79 Patentblatt 79/11**

(45) Bekanntmachung des Hinweises auf die Patenterteilung:
**09.06.82 Patentblatt 82/23**

(84) Benannte Vertragsstaaten:
**BE CH DE FR SE**

(56) Entgegenhaltungen:
**DE - A - 1 947 570**
**DE - A - 2 049 378**
**DE - A - 2 460 994**
**DE - A - 2 635 732**
**DE - A - 2 657 973**
**FR - A - 1 275 165**
**GB - A - 1 036 008**

(73) Patentinhaber: **BASF Aktiengesellschaft**
**Carl-Bosch-Strasse 38**
**D-6700 Ludwigshafen (DE)**

(72) Erfinder: **Eisele, Wolfgang, Dr.**
**Niedererdstrasse 103**
**D-6700 Ludwigshafen (DE)**
Erfinder: **Hann, Ernst Wilhelm**
**Prinzregentenstrasse 37**
**D-6700 Ludwigshafen (DE)**
Erfinder: **Henkel, Helmut**
**Rene-Bohn-Strasse 4**
**D-6700 Ludwigshafen (DE)**
Erfinder: **Wendel, Kurt, Dr.**
**Beethovenstrasse 8**
**D-6700 Ludwigshafen (DE)**

Courier Press, Leamington Spa, England.

# 0 002 044

## Mittel zum Tränken von cellulosehaltigen Faserstoffen

Die Erfindung betrifft ein Mittel zum Tränken von cellulosehaltigen Faserstoffen, insbesondere Papier, auf der Grundlage einer aminoplastischen Tränkharzlösung, die mit einer Dispersion eines Acrylestercopolymerisats modifiziert ist.

Wäßrige bzw. wäßrig-alkoholische Lösungen von Wasserstoff-Formaldehyd- oder Melamin-Formaldehyd-Vorkondensaten, oft auch kurz als Aminoplastharze bezeichnet, eignen sich zum Tränken von saugfähigen Trägermaterialien, z.B. Papierbahnen, Vliesstoffen oder Geweben, die nach dem Trocknen und anschließendem Heißverpressen zu Schichtpreßstoffen (La-minaten) verarbeitet oder zur Oberflächenvergütung von Holzwerkstoffen, z.B. Hartfaser- oder Holzspanplatten verwendet werden. Man kann auf diese Weise harte, kraftzfeste, gegen Wasser und Chemikalien beständige Werkstoffoberflächen von hervorragender Brillanz und Farbklarheit erzeugen, die vor allem im Möbelbau verlangt werden. Melaminharzgebundene Oberflächenbeschichtungen, z.B. von Arbeitsplatten für Küchen, Kantinen etc., sind weithin als "Kunststoffoberflächen" schlechthin bekannt.

Bei hochwertigen Oberflächenvergütungen werden die als Träger dienenden Werkstoffe (hauptsächlich Holzwerkstoffe wie Spanplatten) zunächst mit einer Sperrschicht (underlay), sodann einer farbgebenden (Dekor)schicht und gelegentlich noch mit einer mehr oder minder klar durchsichtigen Überzugsschicht (overlay) versehen, die in der Regel jeweils einen eigenen Papierträger enthalten und in einem Arbeitsgang aufgebracht werden. Dies geschieht in beheizbaren Pressen, unter deren Einwirkung die in die Papier aufgesogenen, trockenen Harze schmelzen und dann unter Vernetzung erhärten und unlöslich werden.

Die Tendenz geht dahin, brauchbare Vergütungen in einem einzigen Arbeitsgang und unter Verwendung nur einer einzigen Papierschicht zu erreichen, also Sperrschicht und Deckschicht einzusparen.

Von der verbleibenden einzigen Schicht wird dabei hohe Deckkraft und die Fähigkeit zum Ausgleich von Unebenheiten der Holzoberfläche verlangt. Daneben werden Oberflächenglanz, Vergilbungsfreiheit, schnelle Aushärtbarkeit und eine hohe Tränkgeschwindigkeit angestrebt.

Während die Deckkraft bisher weitgehend von der Beschaffenheit des Dekorpapiers abhängt, können die übrigen Eigenschaften durch die Wahl geeigneter Tränkharze beeinflußt werden.

Die Erfindung hat sich die Aufgabe gesetzt, die Deckkraft bzw. den Weißgrad von einfarbigen bzw. weißen einlagigen Beschichtungen für Holzwerkstoffe mit Hilfe einer geeigneten Tränkharzzubereitung zu verbessern, wobei die bisher hinsichtlich der übrigen Eigenschaften erreichten Fortschritte jedenfalls erhalten, wenn möglich gesteigert werden sollen.

Es wurde gefunden, daß man Mittel, d.h. Tränkharzlösungen zum Tränken von cellulosehaltigen Faserstoffen auf der Grundlage einer wäßrigen Mischung eines Melamin-Formaldehyd-Kondensats und einer Dispersion eines Acrylesterpolymeren herstellen kann, die beim Aushärten sogar füllstoffarmen oder füllstofffreien Papieren hohen Weißgrad verleihen.

Erfindungsgemäß enthalten diese Mittel

85 bis 98 Gewichtsprozent einer wäßrigen, jeweils z.B. 50 bis 70 Gewichtsprozent Feststoffgehalt aufweisenden Lösung eines an sich üblichen, zum Tränken von Faserstoffen geeigneten Melamin- bzw. Melamin-Harnstoff-Formaldehydkondensats und

2 bis 15 Gewichtsprozent einer jeweils 30 bis 70 Gewichtsprozent nichtflüchtige Bestandteile aufweisenden wäßrigen Dispersion eines Acryl- bzw. Methacrylsäureestercopolymerisats, das jeweils

80 bis 98 Gewichtsprozent Einheiten mindestens eines Esters der (Meth)acrylsäure mit einem 1 bis 4 C-Atome aufweisenden einwertigen Alkohol,

2 bis 20 Gewichtsprozent Einheiten eines Esters der (Meth) acrylsäure mit einem 2 bis 6 C-Atome aufweisenden zweiwertigen Alkohol und/oder des N-Methylol(meth)acrylamids und

gegebenenfalls bis zu 10 Gewichtsprozent Einheiten weiterer, copolymerisierbarer olefinisch ungesättigter Verbindungen enthält.

Äußerlich sind die erfindungsgemäßen Mittel—abweichend von gewöhnlichen Mischungen von Harzlösungen mit Dispersionen—in der Regel klar oder annähernd klar; d.h. daß beim Vermischen der Aminoplastharzlösung mit der Dispersion deren weißes, undurchsichtiges Aussehen verschwindet.

Die Herstellung der erfindungsgemäßen Mittel geschieht einfach durch Mischen ihrer Komponenten.

Es hat sich gezeigt, daß besonders Dispersionen der vorgenannten Art geeignet sind, die unter Verwendung von Emulgierhilfsmitteln auf der Grundlage von Äthylenoxid- (bzw. Propylenoxid-) Addukten, gewöhnlich auch als "nicht-ionogene Emulgatoren" bezeichnet, hergestellt sind. Andere Emulgierhilfsmittel haben manchmal unerwünschte Nebenwirkungen, wie z.B. Ankleben der getränkten Papiere oder Rückstandsbildung an den Preßzulagen (Werkzeugen), bei der Verarbeitung, Vergilbung o.ä. und müssen gegebenenfalls auf solche Nebenwirkungen hin geprüft werden. Die Emulgatoren machen gewöhnlich 0,1 bis 10% der Dispersionen aus. Eine umfassende Darstellung der Chemie solcher nicht-ionogener Emulgatoren findet sich bei Schwartz u. Perry bzw. S., P. und Berch, Surface Active Agents I, S. 202—213 (1949) bzw. II, S. 120—138 (1958), Interscience, New York, auf die hier

2

anstelle einer ausführlichen Abhandlung verwiesen wird. Geeignete Produkte sind in großer Zahl handelsüblich.

Überraschenderweise ist die Verbesserung der Deckkraft bzw. des Weißgrades und der optischen Flächenruhe durch die erfindungsgemäßen Mittel der Verbesserung etwa durch Zusatz eines Weißpigments zum Tränkharz durchaus vergleichbar (vgl. nachfolgendes Beispiel 8). Wendet man hingegen die erfindungsgemäßen Mittel zusammen mit einem Weiß-, gegebenenfalls auch Buntpigment an, so ergibt sich eine zusätzliche Steigerung des Weißgrades bzw. der Deckkraft. Für manche Zwecke ist daher die zusätzliche Verwendung von Pigmenten in den erfindungsgemäßen Mischungen von Vorteil.

Es ist überraschend, daß nach dem Verpressen und Aushärten mit den erfindungsgemäßen Mitteln ein hoher Weißgrad erzielt wird, obwohl gerade sie in flüssigem Zustand annähernd klar durchsichtig sind. Zur Erklärung des Phänomens wird die Annahme gemacht, daß die dispergierten Teilchen des Polymerisats einen ähnlichen Brechungsindex aufweisen wie die wäßrige Aminoplastlösung, wogegen das feste, ausgehärtete Aminoplastharz einen von den ebenfalls ausgehärteten Polymerisatpartikeln stark verschiedenen Brechnungs-index aufweist. Solche festen Mischungen sind bekanntlich undurchsichtig bzw. weiß.

Es versteht sich, daß der Weißgrad bzw. die hohe Deckkraft besonders gut zu beobachten ist bei Verwendung von füllstofffreien bzw. füllstofffarmen Papieren; hierin liegt auch ein besonderer wirtschaftlicher Vorteil des Verfahrens, weil hochgefüllte Papiere sehr kostspielig sind. Als füllstoffarm sollen dabei Papiere verstanden werden, die weniger als etwa 35% anorganische Pigmente, bezogen auf das trockene Fasergemisch, enthalten.

Zur Beurteilung der Erfindung muß gesaft werden, daß es Vorschläge, Aminoplast-Tränkharze auch auf der Grundlage von Melamin mit Polymerisatdispersionen zu modifizieren, schon gegeben hat; beispielsweise ist aus DE—B 23 50 794 und 23 52 243 bekannt, Papiere zunächst mit wäßrigen Lösungen von Aminoplastharzen zu tränken und mit bestimmten, modifizierten Styrol-Acrylester-Copolymerisaten zu beschichten. Hierbei handelt es sich jedoch nicht um die Anwendung von Gemischen; dies gilt auch für einen ähnlichen Vorschlag, der aus der DE—A 11 74 143 bzw. der US—A 3 200 008 bekannt ist und wonach Faserstoffträger zuerst mit einer Aminoplastharzlösung vorgetränkt und hernach mit einer härtbaren Mischung eines ungesättigten Polyesterharzes fertiggetränkt werden.

Ein der Erfindung scheinbar nahekommender Vorschlag der US—A 3 262 838, Papiere mit Mischungen von Aminoplast-harzen und Acrylestercopolymeren zu behandeln, führt von der Erfindung weg; es handelt sich hierbei um Mischungen, die Acrylestercopolymerisate mit Acrylsäure enthalten und als besondere Eigenheit die Wiederauflösbarkeit in alkalischen Wässern aufweisen, wobei der Zweck ist, kurzlebige Papierprodukte, wie Umschläge von illustrierten Zietungen wiederauflösbar bzw. wiederverwendbar zu machen. Ersichtlich bezweckt die Erfindung genau das Gegenteil, nämlich die Herstellung langlebiger Oberflächen, die auch chemisch besonders widerstandsfähig sein sollen.

In der DE—A 16 19 228 wird vorgeschlagen, die Sprödigkeit Aminoplaste enthaltender Kalanderfolien durch Zusatz elastifizierender thermoplastischer Harze zu den duroplastischen Harzen (d.h. Aminoplasten) zu beseitigen.

Weiterhin ist auf die DE—A 22 24 732 hinzuweisen, die den Vorschlag enthält, bei dem sogenannten Doppeltränkverfahren für die zweite Tränkung Mischungen von Aminoplastlösungen mit Acrylharzdispersionen zu verwenden. Hierdurch wird aber der Vorteil der Erfindung, ungefüllte Papiere zu verwenden, nicht erzielt, weil das harzgemisch der zweiten Tränkung auf dem vorgetränkten Papier oberflächlich haften bleibt und somit keine hohe Deckkraft erzielt wird. Außerdem ist die dort vorgeschlagene Mitverwendung von Acrylnitril nach der Erfindung nicht zweckmäßig, weil hierdurch Vergilbungen eintreten, und die nach der Erfindung geeigneten Mengenverhältnisse unterscheiden sich ebenfalls von dem bekannten Vorschlag.

Schließlich kann die Erfindung auch nicht aus der Lehre der DE—B 21 35 072 hergeleitet werden, die sich im wesentlichen mit Tränkharzen auf Acrylatbasis beschäftigt, wobei Aminoplastharze allenfalls in untergeordneten Mengen (bis 15 Gewichtsprozent) mitverwendet werden.

Zum Verständnis der Erfindung ist im einzelnen das folgende zu sagen:

Übliche, zum Tränken von Fasermaterialien—insbesondere Papier—geeignete Melamin- bzw. Melamin-Harnstoff-Tränkharze sind wäßrige Lösungen von Formaldehyde-Kondensaten des Melamins und gegebenenfalls des Harnstoffs, wobei das Molverhältnis von Formaldehyd zu Melamin im allgemeinen zwischen 1,7:1 und 2,2:1 liegt; bei Mitverwendung von Harnstoff, der bekanntlich eine geringere Funktionalität gegenüber Formaldehyd aufweist, und der bis zu etwa 60 Mol% des Melamins ersetzen kann, sinkt das Gesamtmolverhältnis entsprechend, z.B. auf einen Wert von etwa 1,6:1 bis 1,9:1. Der Kondensationsgrad wird in bekannter Weise so eingestellt, daß eine genügend hohe Tränkgeschwindigkeit erzielt wird; günstig ist ein Bereich, der, dargestellt durch die Viskosität einer 50% igen Lösung, bei etwa 40 bis 60 mPa.s liegt. Dies entspricht einer Auslaufzeit beim 4-mm-DIN-Becher von etwa 10 bis 16 Sekunden/20°C.

Wäßrige Dispersionen von Acrylester-Copolymerisaten im Sinne der Erfindung haben im allgemeinen einen Kunststoffgehalt von 30 bis 70 Gewichtsprozent und enthalten vorzugsweise annähernd reine Acrylester-Copolymerisate. Sie werden durch Emulsionspolymerisation mit Hilfe

# 0 002 044

üblicher Radikalbildner (Starter) erhalten, wobei die vorgesehenen Monomeren bevorzugt mittels gewisser Äthylenoxid-Addukte emulgiert werden, wie z.B. den Polyglykoläthern von Alkylphenolen und den Polyglykolestern von ungesättigten Fettsäuren, wie Ricinolsäure oder Ölsäure. Solche Emulgierhilfsmittel sind handelsüblich. Andere Emulgierhilfsmittel sollten im Einzelfall auf ihre Eignung durch einen Vorversuch geprüft werden, da sie gelegentlich Störungen, z.B. Ankleben der Werkstoffoberflächen an den Preßblechen bei der Verarbeitung, hervorrufen.

Die polymerisierbaren Monomeren sind bevorzugt Methyl- bzw. Äthyl-(meth)acrylat und gegebenenfalls n- und t-Butylacrylat, wobei die bekannten Grundsätze für die Herstellung von Acrylesterpolymeren mit gezieltem Eigenschaftsaufbau gelten; es ist z.B. bekannt, daß Methylmethacrylat und t-Butylacrylat die Härte von Polymerfilmen erhöhen, während die übrigen Ester im Gegensinne wirken. Als vernetzungsfähige Monomere dienen Ester der (Meth)-acrylsäure mit einem zweiwertigen Alkohol, die freie Hydroxylgruppen aufweisen und/oder N-Methylol(meth)acrylamid. Auf die Mitverwendung von Monomeren, die z.B. Vergilbungen bewirken, wie Acrylnitril, oder z.B. katalytische Wirksamkeit gegenüber Aminoplastharzen besitzen, wie Acrylsäure, sollte verzichtet werden. Monomere, die in untergeordneten Mengen mitverwendet werden können und keine Ester der (Meth)acrylsäure bzw. N-Methylolacrylamide darstellen, sind z.B. Acrylamid und Methacrylamid, die eine gewisse Emulsionsstabilisierung bewirken. Ein besonderer Vorteil, auch wirtschaftlicher Art, wird im allgemeinen durch andere, zusätzliche Monomere nicht erzielt. Im Einzelfall sollte stets ein Vorversuch gemacht werden, da andere als die genannten Bestandteile Störungen bewirken können.

Beispiel 1 bis 7

a) Herstellung einer Dispersion eines Acrylestercopolymerisats

In einem Rührbehälter werden vorgelegt

20,5 kg vollentsalztes Wasser
0,1 kg einer 35 %igen Lösung eines handelsüblichen Polyglykol-Isooctylphenol-Adduktes, das unter der Handelsbezeichnung Emulgator 825 S erhältlich ist, als Emulgator
0,45 kg Natriumpersulfat
0,03 kg Na-formaldehyd-sulfoxylat (Handelsbezeichnung Rongalit C)

Hierzu wird bei 85°C innerhalb von zwei Stunden eine Monomerdispersion folgender Zusammensetzung gegeben:

22 kg vollensalztes Wasser
4,2 kg des oben genannten Emulgators
0,48 kg Acrylamid
26,2 kg Äthylacrylat
17 kg Methylmethacrylat
4,85 kg Hydroxypropylacrylat

Man erhält eine 50 %ige Polymerdispersion, die mit verdünnter Natronlauge auf pH 7 eingestellt wird.

In gleicher Weise wie vorstehend beschrieben, werden noch weitere unterschiedlich zusammengesetzte Dispersionen im Rahmen der erfindungsgemäßen Zusammensetzung hergestellt. Ihre prozentische Monomerenzusammensetzung ergibt sich aus der nachstehenden Tabelle 1:

Tabelle 1
Zusammensetzung erfindungsgemäß geeigneter Dispersionen:

| Monomere | 1 | 2 | 3 | 4 | 5 | 6 | 7 |
|---|---|---|---|---|---|---|---|
| Äthylacrylat | 54 | — | 40 | 90 | 54 | — | 40 |
| n-Butylacrylat | — | 40 | — | 5 | — | 60 | 36 |
| Methylmethacrylat | 35 | 52 | 52 | — | 15 | 25 | 20 |
| t-Butylacrylat | — | — | — | — | 20 | — | — |
| Hydroxypropylacrylat | 10 | 7 | 7 | — | — | — | 4 |
| Butandiol-1,4-monoacrylat | — | — | — | — | 10 | 10 | — |
| Acrylamid | 1 | 1 | 1 | — | 1 | 5 | — |
| N-Methylolacrylamid | — | — | — | 5 | — | — | — |

b) Herstellung einer erfindungsgemäßen Tränkharzlösung

Die vorstehend beschriebenen Polymerisatdispersionen werden mit einem Anteil von jeweils 5 % mit einem handelsüblichen Melamin-Tränkharz, z.B. dem unter der Handelsbezeichnung ®Kauramin-Tränkharz 782 fl erhältlichen gemischt und die üblichen Härter und Hilfsmittel zugesetzt.

4

Das verwendete Melaminharz besitzt ein Molverhältnis von Formaldehyd zu Melamin wie 1,6:1 und liegt in einer Konzentration von 55 Gew.% (Rückstandsgehalt) als wäßrige Lösung vor.

Nach dem Tränken üblicher füllstoffarmer Papiere eines einheitlichen Flächengewichts von 80 g/m² mit den Mischungen wird das Papier getrocknet. Es ergibt sich ein Harzauftrag von jeweils etwa 130 %, bezogen auf das Papiergewicht.

Proben der getränkten Papiere werden in üblicher Weise zusammen mit einer geschliffenen Spanplatte und mittels eines Hochglanzpreßbleches als Zulage bei einer Temperatur von 135°C und einem Preßdruck von 2 N/mm² jeweils 60 Sekunden verpreßt.

Neben den üblichen Eigenschaftsprüfungen wird der Weißgrad nach der in "Die Farbe", 8 (1959), 187—202 von A. Berger beschriebenen Methode bei drei Spektralbereichen gemessen und auf den einen physiologischen Mittelwert WG/B umgerechnet. Es ergeben sich in allen Fällen Weißgrade, die höher sind als die mit vergleichbaren herkömmlichen Harzlösungen erhältlichen.

Für die Dispersion des Beispiels 1 wird dies in der nachfolgenden Tabelle 3 wiedergegeben; als Vergleich dient dabei ein Tränkharz, dem lediglich ein Hilfsmittel zur Verbesserung des Tränkverhaltens (Netzmittel; Handelsbezeichnung ®Kauropal 930) und ein Härter zugesetzt war.

Tabelle 2

| Tränkharzlösung | a) erfindungsgemäß | b) Vergleich |
|---|---|---|
| Tränkharzlösung | 100 | 100 |
| p-Toluolsulfonsäure (Ammoniumsalz; Härter) | 0.7 | 0.7 |
| Netzmittel | 0.3 | 0.3 |
| Polymerdispersion gem. Biespiel 1 | 5 | — |

Wiederum ausschnittsweise werden mit vier von 10 untersuchten verschiedenen, jeweils 20 % Füllstoffe enthaltenden Papieren erhaltene Ergebnisse in der folgenden Tabelle wiedergegeben; dabei sind die mit $R_Z$, $R_X$ bzw. $R_Y$ bezeichneten Einzelergebnisse der verschiedenen Spektralbereiche ermittel worden wie in der oben angegebenen Veröffentlichung beschrieben. Zusätzlich wurde in üblicher Weise der Glanzgrad bei einem Winkel von 60° gemessen.

Tabelle 3

| Versuch Nr. | | 2a | 2b | 4a | 4b | 8a | 8b | 10a | 10b |
|---|---|---|---|---|---|---|---|---|---|
| Weißgrad | $R_Z$ | 60,5 | 56,7 | 52,2 | 43,7 | 57,6 | 50,0 | 58,4 | 49,1 |
| n. Berger | $R_X$ | 64,7 | 61,6 | 57,4 | 52,0 | 60,6 | 53,9 | 61,0 | 53,8 |
| | $R_Y$ | 63,9 | 61,4 | 56,4 | 50,5 | 59,8 | 52,7 | 61,0 | 52,5 |
| | WG/B | 51 | 47 | 41 | 26 | 51 | 41 | 51 | 38 |
| Glanzgrad RGS (60°) | | 85 | 86 | 84 | 83 | 75 | 81 | 75 | 78 |

Beispiel 8

Es wurde folgende Tränkharzflotte angesetzt

    100   kg des in den Beispielen 1 bis 7 verwendeten Melamin-Tränkharzes

     0,7  kg Härter (wie Beispiel 1)

     0,4  kg Netzmittel

Für die folgenden Versuche wurde außerdem jeweils die in Beispiel 3 angegebene Acrylharzdispersion ("Dispersion"). Wasser sowie eine unter der Handelsbezeichnung ®Luconylweiß erhältliche Titanweiß-Pigmentzubereitung ("Pigment") verwendet. Zum Vergleich wurden die Substanzen unterschiedlich kombiniert bzw. jeweils einzelne fortgelassen (vgl. Tabelle 4). Die Tränkharzflotte wurde auf zwei verschiedene Papiere mit einem Flächengewicht von jeweils 80 g/m² (Typ A: fast weiß, Typ B: reinweiß—Ergebnisse gemittelt) jeweils in einer Menge aufgebracht, daß sich ein Feststoffauftrag von rund 30 %, bezogen auf das Rohpapiergewicht, ergab und das Papier in üblicher Weise auf eine geschliffene Spanplatte aufgebrecht (vgl. Angaben zu Beispielen 1 bis 7).

Tabelle 4

Versuche unter Pigmentzusatz (Zusätze jeweils bezogen auf Harzflotte=100)

| | 1 | 2 | 3 | 4 |
|---|---|---|---|---|
| Dispersion (%) | — | 8 | — | 4 |
| Pigment (%) | — | — | 8 | 4 |
| Wasser (%) | 8 | — | — | 8 |
| Weißgrad WG/B | 30 | 45 | 45 | 48 |

Das Ergebnis zeigt, daß die Verwendung erfindungsgemäßer Dispersionen einen vollwertigen Ersatz für handelsübliche Pigmentdispersionen bedeuten kann; die Verwendung von Mischungen mit handelsüblichen Pigmentdispersionen (auch farbigen z.B) kann in vielen Fällen Vorteile bieten.

## Patentansprüche

1. Mittel zum Tränken von cellulosehaltigen Faserstoffen auf der Grundlage einer wäßrigen Mischung eines Melamin-Formaldehyd- bzw. Melamin/Harnstoff-Formaldehyd-Kondensats und einer Dispersion eines Acrylesterpolymeren, enthaltend 85 bis 98 Gewichtsprozent einer wäßrigen, jeweils 50 bis 70 Gewichtsprozent Feststoffgehalt aufweisenden Lösung eines an sich üblichen, zum Tränken von Faserstoffen geeigneten Melamin- bzw. Melamin/Harnstoff-Formaldehydkondensats, dadurch gekennzeichnet, daß es außerdem 2 bis 15 Gewichtsprozent einer jeweils 30 bis 70 Gewichtsprozent nichtflüchtige Bestandteile aufweisenden wäßrigen Dispersion eines Acryl- bzw. Methacrylsäureestercopolymerisats, das jeweils

80 bis 98 Gewichtsprozent Einheiten mindestens eines Esters der (Meth)acrylsäure mit einem 1 bis 4 C-Atome aufweisenden einwertigen Alkohol,

2 bis 20 Gewichtsprozent Einheiten eines Esters der (Meth)acrylsäure mit einem 2 bis 6 C-Atome aufweisenden zweiwertigen Alkohol und/oder des N-Methylol(meth)acrylamids und

gegebenenfalls bis zu 10 Gewichtsprozent Einheiten weiterer copolymerisierbarer olefinisch ungesättigter Verbindungen enthält.

2. Mittel nach Anspruch 1, enthaltend zusätzlich 0,1 bis 10 Gewichtsprozent eines Emulgators auf der Grundlage eines Anlagerungsproduktes von Äthylenoxid an ein Alkylphenol.

## Claims

1. An agent for impregnating cellulosic fibrous materials, based on an aqueous mixture of a melamine-formaldehyde or melamine/urea-formaldehyde condensate and an acrylic ester polymer dispersion, containing 85 to 98% by weight of an aqueous solution, having a solids content of from 50 to 70% by weight, of a conventional melamine or melamine/urea-formaldehyde condensate suitable for the impregnation of fibrous materials, characterized in that it additionally contains from 2 to 15% by weight of an aqueous dispersion, containing from 30 to 70% by weight of non-volatile constituents, of an acrylic or methacrylic ester copolymer which contains

from 80 to 98% by weight of units of at least one ester of acrylic or methacrylic acid with a monohydric alcohol of 1 to 4 carbon atoms,

from 2 to 20% by weight of units of an ester of acrylic or methacrylic acid with a dihydric alcohol of 2 to 6 carbon atoms and/or N-methylol acrylamide or methacrylamide, and optionally

up to 10% by weight of units of further copolymerizable olefinically unsaturated compounds.

2. An agent as claimed in claim 1, additionally containing from 0.1 to 10% by weight of an emulsifier based on an adduct of ethylene oxide with an alkylphenol

## Revendications

1. Composition pour l'imprégnation de matières fibreuses contenant de la cellulose à base d'un mélange aqueux d'un condensat mélamine-formaldéhyde ou mélamine/uréeformaldéhyde et d'une dispersion d'un polymère acrylique, contenant 85 à 98% en poids d'une solution aqueuse avec une teneur en matière solide de 50 à 70% en poids d'un condensat mélamine- ou mélamine/urée-formaldéhyde usuel, convenant pour l'imprégnation de matières fibreuses, caractérisée en ce qu'elle contient en outre 2 à 15% en poids d'une dispersion aqueuse avec une teneur en composants non volatils de 30 à 70% en poids d'un copolymère d'acrylates et(ou) de méthacrylates, composé de

80 à 98% en poids d'unités dérivées d'au moins un ester de l'acide (méth)acrylique et d'un alcool monovalent en $C_1$ à $C_4$ et de

2 à 20% en poids d'unités dérivées d'un ester de l'acide (méth)acrylique et d'un alcool bivalent en $C_2$ à $C_6$ et(ou) du N-méthylol-(méth)acryl-amide

et contenant éventuellement jusqu'à 10% en poids d'unités dérivées d'autres composés à insaturation oléfinique copolymérisables.

2. Composition suivant la revendication 1, contenant en outre 0,1 à 10% en poids d'un émulsionnant à base d'un produit de la condensation de l'oxyde d'éthylène sur un alcoyl-phénol.